**Europäisches Patentamt**

**European Patent Office**

**Office européen des brevets**

(11) Publication number: **0 040 054**

**A1**

(12) **EUROPEAN PATENT APPLICATION**

(21) Application number: **81302024.5**

(22) Date of filing: **07.05.81**

(51) Int. Cl.³: **F 16 D 65/12**
**C 23 C 5/00, C 23 C 7/00**
**C 23 C 1/02**

(30) Priority: **08.05.80 GB 8015179**

(43) Date of publication of application:
**18.11.81 Bulletin 81/46**

(84) Designated Contracting States:
**DE FR GB IT SE**

(71) Applicant: **BL CARS LIMITED**
**35-38 Portman Square**
**London W1H 0HQ(GB)**

(72) Inventor: **Watson, Roger John**
**10 Hop Gardens Avenue**
**Bromsgrove Worcester, B60 2NX(GB)**

(74) Representative: **Waters, Jeffrey**
**BL Patent and Trade Mark Department Cowley Body Plant**
**Cowley Oxford OX4 5NL(GB)**

(54) **Brake disc corrosion protection.**

㊅ Cast iron brake discs of vehicles tend to rust if the vehicle is stored for an appreciable time before the vehicle is delivered to a customer, and this adversly affects braking performance and can necessitate replacement of the brake disc before use of the vehicle. Attempts to solve the problem, have included the use of corrosion-resistant paint but this can be worn off in driving the vehicle to its storage point. According to the invention, the parts of the brake disc which are swept by the brake pads in use are zinc coated. It has been found that the zinc coating remains after much more prolonged use than did the paint coating hitherto used, and that it has no adverse effect on the braking characteristics or the brake pads. Best results are obtained by spraying hot molten particles of zinc in a jet onto the brake disc and then rolling it.

EP 0 040 054 A1

Croydon Printing Company Ltd.

BRAKE DISC CORROSION PROTECTION

This invention relates to brake discs, and in particular to protecting them from corrosion.

Rusting of cast iron brake discs is not a problem when the vehicle to which they are fitted is in normal use, since the brake discs are wiped by the brake pads during braking. The brake discs can however rust when the vehicle is left unused for any length of time, for example, three or four weeks. This problem is felt particularly when the vehicle is newly completed, because it might be several weeks before a vehicle which has just rolled off the assembly line is finally delivered to a customer. If rusting does take place, it can be alleviated by fitting special brake pads which are slightly abrasive, but even when the rust has been removed, the braking performance is affected. Corrosion of the brake disc in the region of the brake pads can be worse than elsewhere, and pitting of the brake disc in this way results in brake judder in use. For these reasons, it is sometimes found necessary to replace the brake discs before the vehicle taken from store is delivered to a customer.

It has been proposed to overcome this problem by applying corrosion-resistant paint such as Suncorite to the swept areas of the brake disc before it is fitted to the vehicle, but this coating wears off quickly, say, in a few miles of normal driving. Typically a car would be stored further than this from the assembly line. Hence the coating has often worn off by the time the vehicle reaches its storage point.

It is known in motor bikes for the brake disc to be made of stainless steel, but this leads to greater expense. Aluminium alloy has also been used and is also expensive.

The invention provides a method of treating a cast iron brake disc which comprises coating with zinc, at least the areas that are swept by the brake pads in use.

It has been found that such a zinc coating remains after much more prolonged use than did the paint coating hitherto used, and has no adverse effect on braking characteristics or on the brake pads.

The zinc may be applied: chemically, for example, by means of an acid electroplate treatment; thermally, for example, by means of a hot dip galvanising treatment; but is preferably applied in a spraying process. Advantageously, hot molten particles of zinc are projected in a jet of gas to the brake disc.

The zinc-treated surface may be finished with an abrasive, but is preferably rolled. The invention also provides a cast iron brake disc treated in accordance with the method of the invention.

The invention also provides a vehicle having such treated brake discs.

Methods of treating cast iron brake discs in accordance with the invention, will now be described, by way of example.

In the first method, a cast iron brake disc for the front wheels of an Austin Morris Princess car is gritblasted with chilled iron angular grit in order to provide a key for subsequent zinc coating. The whole disc(swept area and other surfaces) is then zinc coated for 30 seconds by means of zinc wire or powder, melted by an electric arc and projected by a high velocity air jet onto the surface of the disc. The dimensions of the disc before treatment are 10.6 inch diameter, by $\frac{1}{2}$ inch thickness, of which the brake pads in use act on the outer 2.65 inch of the disc. The tolerance for the parallelism of the swept area is 0.4 thousandths of an inch, that is, the difference in thickness of the swept area between the thickest point and the thinnest point is no more than 0.4 thousandths of an inch.

A zinc coating of 2 to 3 thousandths of an inch is applied to the disc. The surface of the disc is a little rough after the spraying process, and therefore is rolled flat by means of a pair of hardened steel rollers between which the outer swept area of the disc is fed. The disc is rotated so that each part of the circumference of the disc is successively squeezed between the rollers. This is continued until a surface finish of 150 C.L.A. (centre line average, a measure of the evenness of the surface in microinches) maximum is achieved.

When tested on the car, it was found that the coating stayed on in conditions with average braking for at least fifty miles (at least one hundred brake applications) and was not fully removed until about two hundred and fifty miles. The corrosion protection thus held good for transferring the car to a store at a typical distance away from an assembly plant. The braking was not adversely affected. Further, it was found that the zinc coating did not have any tendency to flake away or crack, but rather adhered to the disc and wore down smoothly.

In a second method, the method followed was exactly the same as the first except that the zinc sprayed disc was finished with emery cloth instead of by rolling. The parallelism of the swept surfaces was not so good as in the first method (the tolerance, or difference between the thickest and thinnest parts being 0.5 thousandths of an inch), resulting in slight brake judder in use   The life of the coating was about the same as in the first method.

In a third method, the procedure followed was the same as the first except that gas spraying was used instead of arc spraying, in other words, an oxygen-fuel gas flame was used to melt the zinc wire or powder. The parallelism of the swept area was again not so good as in the first method, the difference between the thickest and thinnest part of the disc being 0.5 thousandths of an inch. The life of the coating was the same but a slight noise was noticed from the pads.

In a fourth method, the cast iron brake disc used was as in the first method, which was cleaned as a preliminary step. The zinc coating was applied by means of hot dip (zinc acid) galvanising. The coating time was $2\frac{1}{2}$ minutes. No surface finishing was required in this case. After 50 miles of use of the pads, there were no signs or corrosion. The brake feel was normal.

In a fifth method, the cast iron brake disc at the first method was cleaned, and was zinc coated by sherardizing, a process in which the disc is put in a drum containing zinc dust, the drum then being rotated in a furnace at a temperature of approximately 370°C. The coating time was 2 hours. After 50 miles use of the brake disc, slight spots of rust and slight noise was noticed, but good feel and good adhesion were obtained.

In a sixth method, the cast iron brake disc of the first method was cleaned and then acid zinc plated for 30 minutes. The brake disc showed signs of corrosion and slight noise after 50 miles use, but the feel of the brakes was good.

0040054

- 7 -

CLAIMS

1   A method of treating a cast iron brake disc, which comprises coating with zinc at least the areas that are swept by
the brake pads in use.

2   A method as claimed in claim 1, wherein the zinc is
applied in a spraying process.

3   A method as claimed in claim 2, wherein hot molten particles of zinc are projected in a jet of gas to the brake disc.

4   A method as claimed in any one of claims 1 to 3, wherein
the zinc-treated surface is rolled.

5   A method of treating a cast iron brake disc substantially
as hereinbefore described.

6   A cast iron brake disc which has been treated in accordance with the method as claimed in any one of claims 1 to 5.

European Patent Office

**EUROPEAN SEARCH REPORT**

Application number

0040054

EP 81302024.5

| Category | Citation of document with indication, where appropriate, of relevant passages | Relevant to claim |
|---|---|---|
| | DE – A1 – 2 653 665 (GOODYEAR AEROSPACE CORPORATION)<br>  * Claim 7 *<br>& GB–A–1 544994 | 1 |
| | DD – A – 36 292 (W. DEMNITZ)<br>  * Whole document * | 1 |
| | GB – A – 1 007 902 (STURROCK & ROBSON HOLDINGS LIMITED)<br>  * Claims * | 1 |

**DOCUMENTS CONSIDERED TO BE RELEVANT**

**CLASSIFICATION OF THE APPLICATION (Int Cl ³)**

F 16 D 65/12
C 23 C 5/00
C 23 C 7/00
C 23 C 1/02

**TECHNICAL FIELDS SEARCHED (Int. Cl.³)**

F 16 D
C 23 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

X The present search report has been drawn up for all claims

| Place of search | Date of completion of the search | Examiner |
|---|---|---|
| VIENNA | 03-08-1981 | SLAMA |

EPO Form 1503.1 06.78